# EUROPEAN PATENT SPECIFICATION

(11) **EP 0 581 964 B1**
(45) Date of publication and mention of the grant of the patent: **01.07.1998**
(21) Application number: 93903327.0
(22) Date of filing: 08.02.1993
(51) Int. Cl.: H01M 6/12, H01M 10/04

(54) **METHOD OF PRODUCING THIN CELL**
VERFAHREN ZUR HERSTELLUNG DÜNNER ZELLEN
PROCEDE POUR LA PRODUCTION D'ELEMENTS D'ACCUMULATEUR EN COUCHES MINCES

(30) Priority: 14.02.1992 JP 61213/92
(43) Date of publication of application: 09.02.1994
(73) Proprietor: YUASA CORPORATION, Takatsuki-shi, Osaka 569 (JP)
(72) Inventor: KAGAWA, Hiroshi Yuasa Corporation 6-6, Josai-cho, Osaka 569 (JP); KATO, Shiro Yuasa Corporation 6-6, Josai-cho, Osaka 569 (JP); MURATA, Kazuo Yuasa Corporation 6-6, Josai-cho, Osaka 569 (JP)
(74) Representative: Stoner, Gerard Patrick
(86) International application number: PCT/JP93/00159
(87) International publication number: WO 93/16497

(56) References cited:
- FR-A- 2 032 951
- JP-A-61 230 269
- JP-A-61 273 857
- JP-A-62 226 575
- JP-A-62 281 273
- JP-A-63 119 155
- US-A- 3 004 094
- US-A- 3 674 565
- US-A- 5 089 027
- PATENT ABSTRACTS OF JAPAN vol. 9 no. 178 (E-330) ,23 July 1985 & JP-A-60 050855 (MATSUSHITA DENKI SANGYO KK)
- PATENT ABSTRACTS OF JAPAN vol. 9 no. 280 (E-356) ,8 November 1985 & JP-A-60 124359 (MATSUSHITA DENKI SANGYO KK)

## Description

This invention relates to a manufacturing method for film type batteries, such as are used in the electronic equipment and electric automobile fields.

### Background

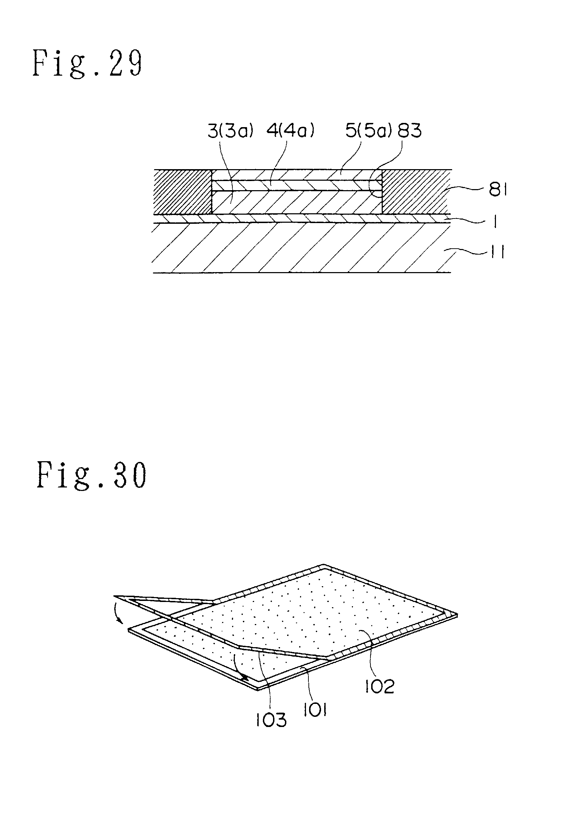

Fig. 30 is an oblique view showing one stage of a conventional manufacturing method for film type batteries. In the conventional method an active material 102 is applied within a region defined by a frame after installing the frame on a surface of a current collector plate 101. The frame is removed and a sealing agent 103 put on the area where the frame was. An electrolyte layer is formed on a separate current collector plate in the same way, and the current collector plates placed one upon the other.

In the above conventional method, however, removing the frame and putting the sealing agent 103 on the area where the frame was installed is troublesome, so that this method has been inferior for mass-production. The active material layer and the electrolyte layer are formed on different current collector plates, so that the applied thicknesses and areas of the active material and electrolyte are apt to differ and so cause variation in battery quality.

JP-A-63/119155 is an example of a prior-published document describing the use of such a frame.

USA-A-3004 094 and JP-A-60/050855 describe a series of holes or windows formed through a long ribbon of sealing material for forming a series of laminar cells in a continuous process.

An object herein is to provide a new method of manufacturing a film-type battery as regards formation of the layer structure thereof, suitable for mass production with little variation in quality.

The invention provides a manufacturing method for a film-type battery, equipped with a generating element composed of a positive active material, an electrolyte material and a negative active material placed one upon another in a layer structure between first and second current collector plates, which includes the following process sequence:
(a) application of a sealing layer on a substrate,
(b) subsequent creation of a through-hole through the sealing layer by half-cutting, to form a laminar recess defined by the side of the through-hole in the sealing layer and the upper surface of the substrate, and
(c) filling of the recess with a said material for the generating element;
carried out at least once, with the first current collector plate as substrate, and optionally repeated thereafter.

The sequence may be carried out three times as specified in claims 2, twice according to alternative sequences specified in claims 3 and 4, or once as in claim 5.

In this invention, the generating element is formed by carrying out the installation of layers and filling of materials continuously, so that there is good workability and a film type battery can easily be mass manufactured. Further, since the generating element is formed in the through hole of a layer comprising sealing agent, its dimensions are determined by dimensions of the through hole. In addition, the thickness of the layer comprising the sealing agent and the size of the through hole can be set to specified values precisely and easily. Consequently, the generating element can be set to a specified size precisely and easily. That is, the generating element or the film type battery can be obtained without producing any dispersion of its quality.

At least one of the first and second current collector plates may be made of a foil or a deposition film having a thickness of 0.001 mm to 0.05 mm, and a base paper comprising the sealing agent may be stuck to the current collector plate. According to this procedure, the current collector plate can easily be wound up, e.g. as a roll, without producing pin holes or cracks so that workability can be improved.

In at least one of the installation processes, a layer having a peeling layer on its surface may be used for the layer comprising the sealing agent, and the peeling layer may be removed after the filling process succeeding the installation process. According to this procedure the surface of the layer comprising the sealing agent can be prevented from being contaminated by the filling process, so that sealing ability of the film type battery owing to the sealing agent can be made better and performance of the film type battery can be improved.

A thickness of the peeling layer may be set approximately equal to a difference of thicknesses before and after drying of composition material of the generating element held by the holding process. According to this procedure, removal of excess composition material becomes unnecessary after removing the peeling layer, so that holding the composition material in the filling process succeeding the next layer installation process becomes easy and the workability is improved.

### Brief Description of the Drawings

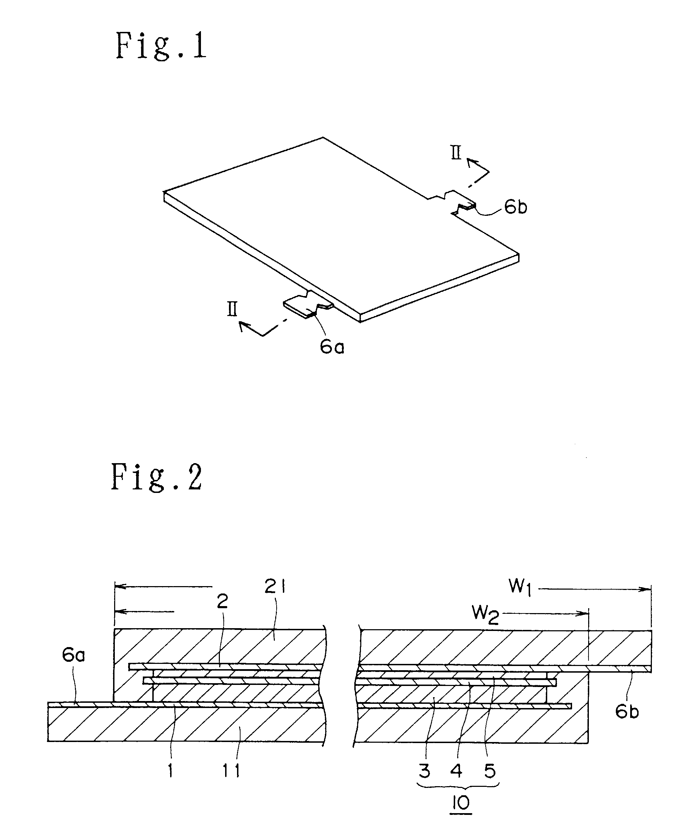

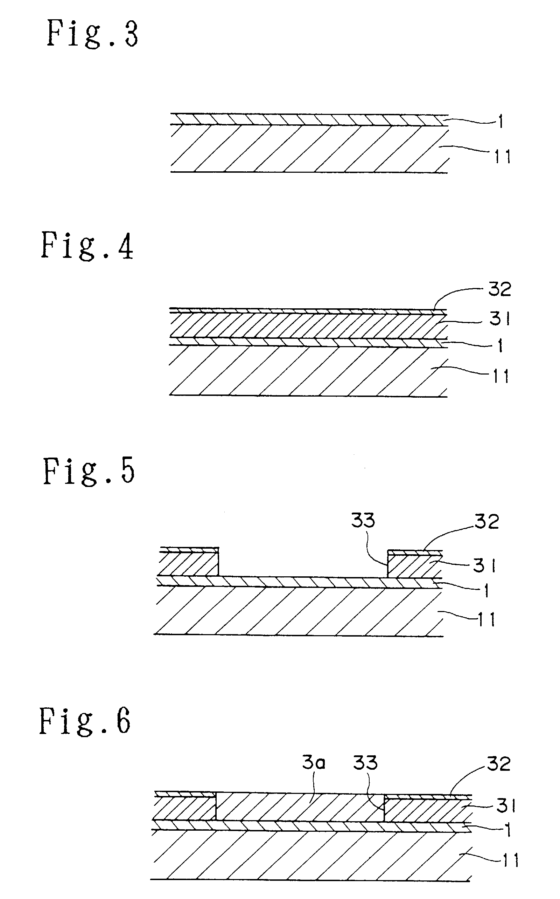

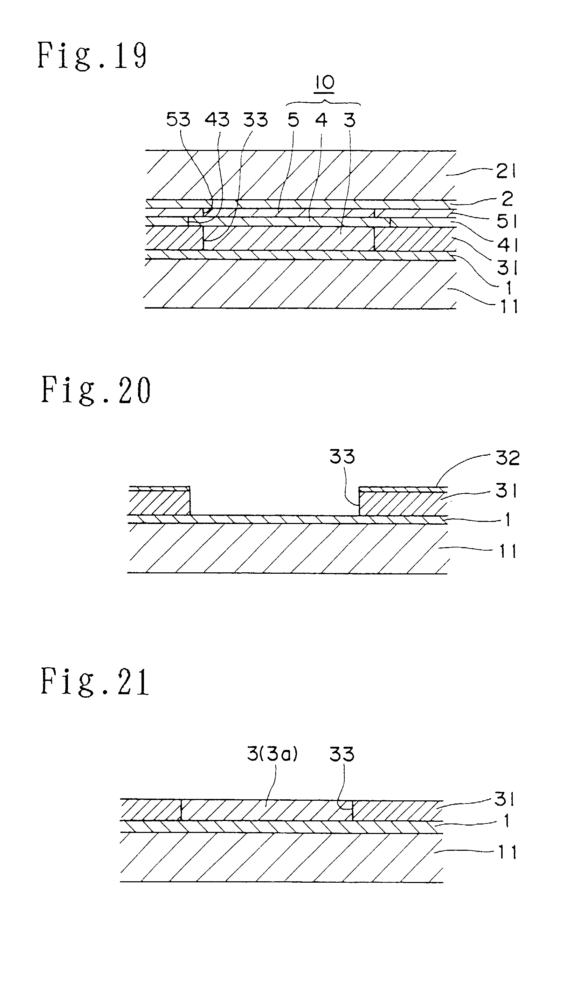

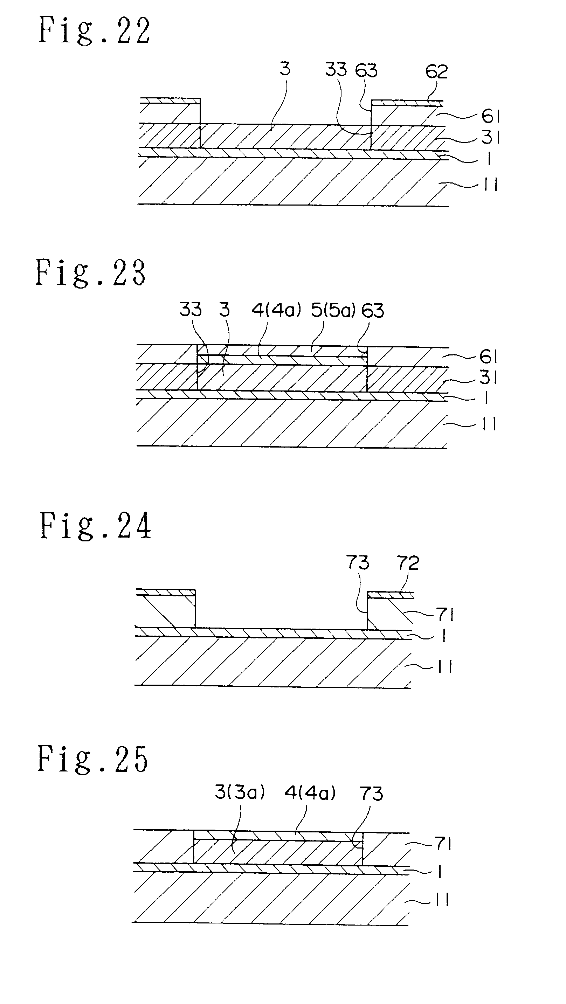

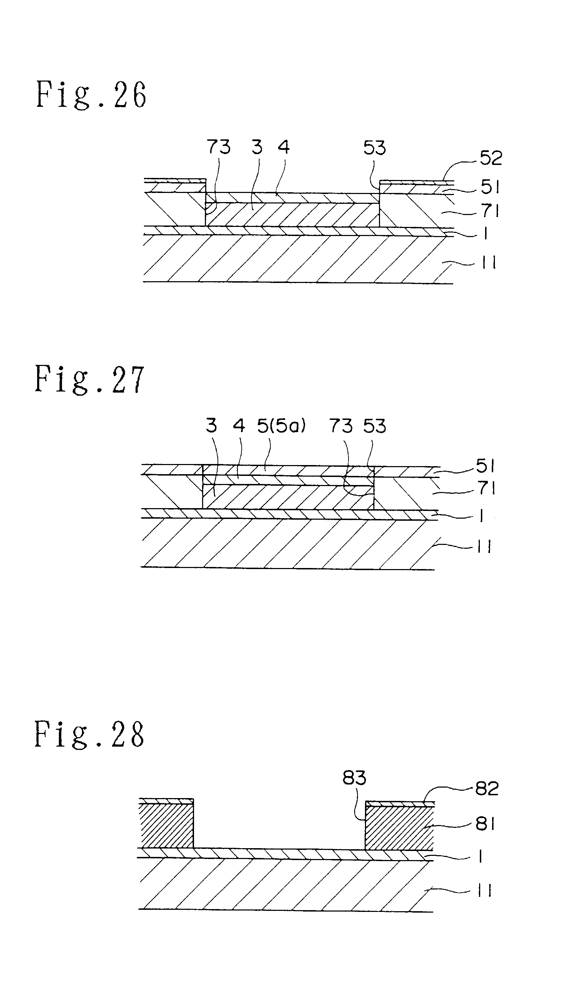

Fig. 1 is an oblique view showing a film-type battery obtained by a method of Embodiment 1. Fig. 2 is a sectional view taken on a line II - II of Fig. 1. Figs. 3 to 19 are vertical sectional views showing the method of embodiment 1 in sequential stages. Figs. 20 to 23 are vertical sectional views showing a method of Embodiment 2 in sequential stages. Figs. 24 to 27 are vertical sectional views showing a method of Embodiment 3 in sequential stages. Fig. 28 and Fig. 29 are vertical sectional views showing a method of Embodiment 4 at two stages. Fig. 30 is an oblique view showing one stage in a conventional manufacturing method for a film type battery.

### Embodiment 1

Fig. 1 is an oblique view showing a film type battery obtained by a manufacturing method of this invention, and Fig. 2 is a sectional view taken on a line II-II of Fig. 1. In the figures, 1 and 2 are a positive current collector plate and a negative current collector plate made of stainless steel foil, 3 is a layer comprising a positive active material, 4 is a layer comprising an electrolyte, and 5 is a layer comprising a negative active material. A base paper 11 comprising a sealing agent is bonded to a lower surface of the positive current collector plate 1, and a base paper 21 comprising the sealing agent is also bonded to an upper surface of the negative current collector plate 2. A generating element 10 is composed of the layers 3, 4 and 5, and the generating element 10 is held between the current collector plates 1 and 2 and sealed by the sealing agent. 6a is a positive terminal and 6b is a negative terminal. Each of the base papers 11, 21 is bonded to both of the terminals 6a and 6b so that electric short-circuiting is prevented.

A method of manufacturing the film type battery having the above structure is now explained with reference to the drawings. Polypropylene-based resin was used for the sealing agent and a material comprising polyethylene-based resin was used for the peeling layer. Dimensions of the above components were as follows; width W₁ was 400 mm, width W₂ was 300 mm, thicknesses of the base papers 11 and 21 were 0.1 mm, the thickness of each of the current collector plates 1 and 2 was 0.02 mm, thickness of the layer 3 was 0.05 mm and thicknesses of the layer 4 and 5 were 0.02 mm.

First, the positive current collector plate 1 was bonded onto the base paper 11 as shown in Fig. 3. A peeling layer 32 having a thickness of 0.01 mm was formed on an upper surface of a sealing agent layer 31 having a thickness of 0.05 mm, and the sealing agent layer 31 was bonded onto the positive current collector plate 1 as shown in Fig.4. A through-hole 33 having a specified dimension was made in the peeling layer 32 and sealing agent layer 31 by half-cutting, as shown in Fig. 5. Positive active material 3a was applied in the through-hole 33 to a thickness of 0.06 mm as shown in Fig. 6, and dried at a temperature in the range from about 50°C to about 250°C. On drying the thickness of the positive active material 3a contracted by about 20% and became approximately the same as that of the sealing agent layer 31 as shown in Fig. 7. The thickness of the peeling layer 32 was set approximately equal to the difference of thicknesses before and after drying of the positive active material 3a. The peeling layer 32 was then removed as shown in Fig. 8. Thereby, a layer 3 comprising the positive active material 3a was held to the sealing agent layer 31.

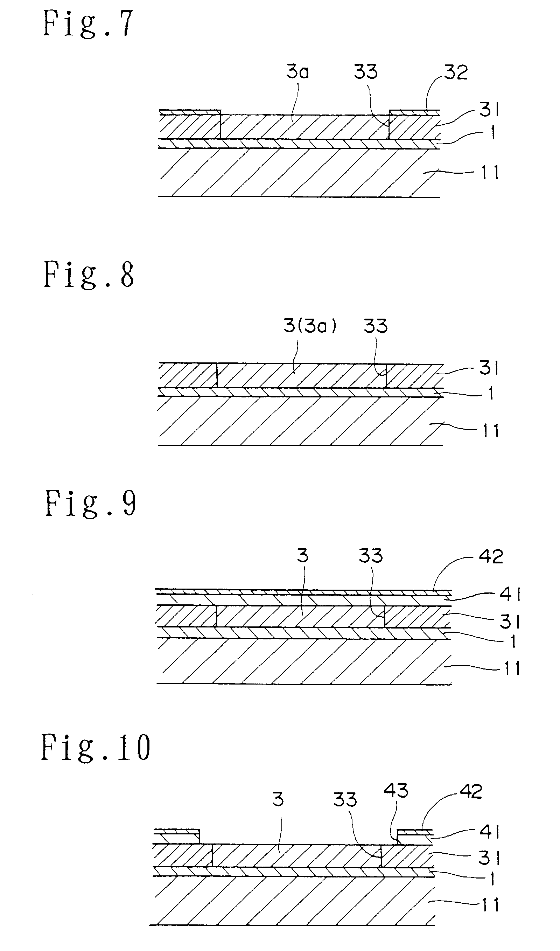

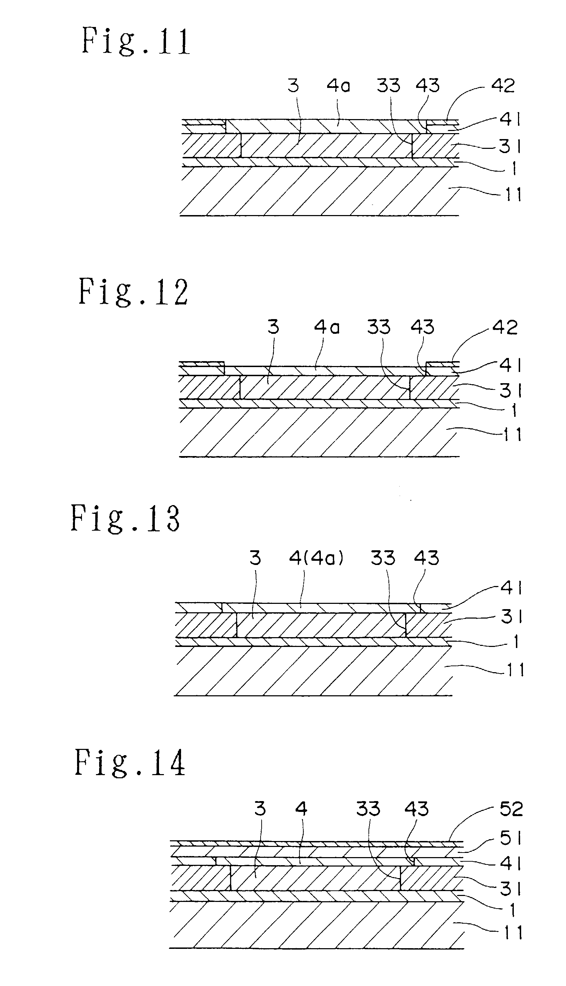

Secondly, a peeling layer 42 having a thickness of 0.01 mm was formed on an upper surface of a sealing agent layer 41 having a thickness of 0.02 mm, and the sealing agent layer 41 was bonded onto the layer 3 and the sealing agent layer 31 as shown in Fig. 9. A through-hole 43 having a dimension slightly larger than that of the through-hole 33 was made in the peeling layer 42 and sealing agent layer 41 by half-cutting, as shown in Fig. 10. An electrolyte 4a was applied within the through hole 43 to a thickness of 0.03 mm as shown in Fig. 11, and dried at a temperature in the range from about 50°C to about 250°C. On drying the thickness of the electrolyte 4a contracted by about 30% and became approximately equal to that of the sealing agent layer 41 as shown in Fig. 12. The thickness of the peeling layer 42 was set approximately equal to the difference of thicknesses before and after drying of the electrolyte 4a. The peeling layer 42 was then removed as shown in Fig. 13. Thereby, a layer 4 comprising the electrolyte 4a was held to the sealing agent layer 41.

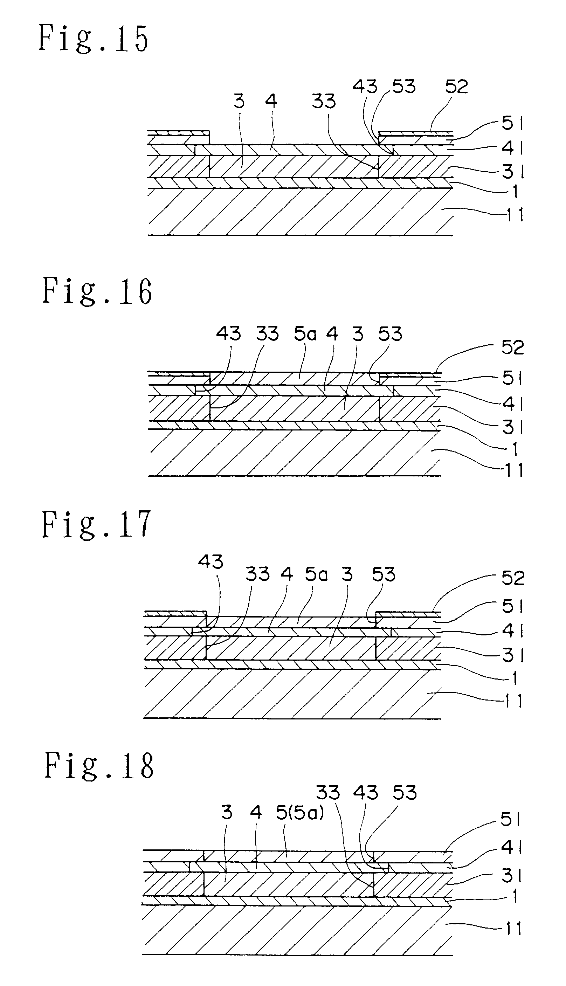

Thirdly, a peeling layer 52 having a thickness of 0.01 mm was formed on an upper surface of a sealing agent layer 51 having a thickness of 0.02 mm, and the sealing agent layer 51 was bonded onto the electrolyte layer 4 and the sealing agent layer 41 as shown in Fig. 14. A through-hole 53 having the same dimension as the through-hole 33 was made in the peeling layer 52 and sealing agent layer 51 by half-cutting, as shown in Fig. 15. A negative active material 5a was applied in the through-hole 53 to a thickness of 0.03 mm as shown in Fig. 16, and dried at a temperature in the range from about 50°C to about 250°C. On drying the thickness of the negative active material 5a contracted by about 30% and became approximately equal to that of the sealing agent layer 51 as shown in Fig. 17. The thickness of the peeling layer 52 was set approximately equal to the difference of thicknesses before and after drying of the negative active material 5a. The peeling layer 52 was then removed as shown in Fig. 18. Thereby, the sealing agent layer 51 holding the layer 5 comprising the negative active material 5a was obtained.

As illustrated by Fig. 19, base paper 21 was bonded onto an upper surface of the negative current collector plate 2 and the negative current collector plate 2 was bonded onto the layer 5 and the sealing agent layer 51. The base papers 11, 21 and the sealing agent layers 31, 41, 51 were melt bonded under reduced pressure so as to seal the generating element 10 under reduced pressure. Its outer periphery was half-cut to form the two terminals 6a, 6b (Fig. 1) and its external form trimmed to conform to that of the battery.

In the method of this embodiment the layer 3 is formed by continuously carrying out the installation process for installing the sealing agent layer 31 and the holding process for holding the positive active material 3a to the through hole 33 of the sealing agent layer 31, the layer 4 is formed by continuously carrying out the installation process for installing the sealing agent layer 41 and the holding process for holding the electrolyte 4a to the through hole 43 of the sealing agent layer 41, and the layer 5 is formed by continuously carrying out the installation process for installing the sealing agent layer 51 and the holding process for holding the negative active material 5a to the through hole 53 of the sealing agent layer 51. Namely, the generating element 10 comprising the layers 3, 4 and 5 is formed by continuously carrying out installation process and holding process comprising similar works. Consequently, according to the above method, the film type battery can be manufactured with good workability, that is, good mass-production ability.

Specifically, the maximum throughput of battery production was 30 cells/min. using the conventional method shown in Fig. 30, but was increased to 100 cells/min. using the method of this embodiment. That is, the mass-production ability was improved by the method of this embodiment.

Since the layer 3 is formed within the through hole 33, its dimensions are determined by those of the through-hole 33. Dimensions of the layers 4 and 5 are also determined by those of the through-holes 43 and 53 in the same way. In addition, the thicknesses of the respective layers 3, 4 and 5 and the dimensions of the respective through-holes 33, 43 and 53 can be set to specified dimensions precisely and easily. Accordingly, the generating element 10 can be set to specified dimensions precisely and easily and the film type battery can be obtained without producing any dispersion of quality.

Table 1 shows dispersions of battery capacity and fractions defective at time of manufacture for batteries obtained by the method of this embodiment (Embodiment battery) and for batteries obtained by the conventional method shown by Fig. 30 (Conventional battery). As seen from Table 1, the Embodiment battery offers smaller dispersion and fraction defective.

**[Table 1]**

| | Embodiment battery | Conventional battery |
|---|---|---|
| Battery capacity | 100∼120mAh | 87∼116mAh |
| Fraction defective | 0.07% | 10.63% |

Each current collector plate 1, 2 comprises stainless steel foil and has a thickness of 0.02 mm, and the base papers 11, 21 are bonded to the two current collector plates 1, 2, so that it becomes easy to wind up the current collector plates 1, 2 e.g. into a roll without producing pin-holes or cracks; the workability is improved. Table 2 shows a relation between the thickness of the current collector plate and the fraction defective as regards air-tightness. As seen from Table 2, the fraction defective in air-tightness becomes minimum when the thickness of current collector plate lies within a range of 0.001 mm to 0.05 mm.

**[Table 2]**

| Thickness (t) of current collector plate | Fraction defective of air-tightness |
|---|---|
| t ≤ 0.001 mm | about 1% |
| 0.0001 mm < t ≤ 0.05 mm | 0.02 ∼ 0.04% |
| 0.05 mm < t ≤ 1.0 mm | 0.05 ∼ 0.98% |
| 1.0 mm < t | 1.1% or more |

The component having the peeling layer 32 on its surface is used for the sealing agent layer 31 and the peeling layer 32 is removed after the holding process of positive active material 3a, so that the surface of the sealing agent layer 31 can be prevented from being contaminated by the holding process. The components having the peeling layers 42 and 52 are used for the sealing agent layers 41 and 51 respectively and the peeling layers 42 and 52 are removed after the holding process of positive active material 4a and negative active material 5a, so that the surfaces of the sealing agent layers 41 and 51 can be prevented from being contaminated by the holding process. Accordingly, sealing performance of the film type battery owing to the sealing agent can be improved and performance of the film type battery can be made better.

Further, the thickness of the peeling layer 32 is set approximately equal to the difference of thicknesses before and after drying of the positive active material 3a held by the holding process, so that the work for removing the excessive amount of positive active material 3a becomes unnecessary after removing the peeling layer 32. The thicknesses of the peeling layers 42 and 52 are set approximately equal to the differences of thicknesses before and after drying of the electrolyte 4a and negative active material 5a respectively in the same way, so that the works for removing the excessive amounts of the electrolyte 4a and the negative active material 5a become unnecessary after removing the peeling layers 42 and 52. Therefore, the work for holding the electrolyte 4a next to the positive active material 3a and, in addition, the work for holding the negative active material 5a next to the electrolyte 4a become easy so that the workability can be improved.

As described above, according to the foregoing method, the highly efficient film type battery can be obtained by mass-production easily without producing dispersion in its quality.

The component having the peeling layer 32 is used for the sealing agent layer 31, however, a component not having the peeling layer 32 may be used. That goes for the sealing layers 41 and 51, too. The thicknesses of peeling layers 32, 42 and 52 may not be set to the above thicknesses. Even by these methods, the film type battery can be obtained easily by mass-production.

As a means for holding the negative active material, a method may be used wherein a negative active material previously prepared by half-cutting is transferred to a through hole 53.

### Embodiment 2

Fig. 20 through Fig. 23 are vertical sectional views showing the method of Embodiment 2 in sequential stages. In these figures, components the same as for Embodiment 1 are indicated with the same numbers. Three sealing agent layers are installed in the method of Embodiment 1. The method of this embodiment uses only two sealing agent layers, and is different from Embodiment 1 in this respect but the same in other respects.

In the first place, in the method of this embodiment, the sealing agent layer 31 having the peeling layer 32 was bonded onto the positive current collector plate 1 on the base paper 11 so as to form the through hole 33, as shown in Fig. 20. In the second place, the positive active material 3a was applied within the through hole 33 and dried, and then the peeling layer 32 was removed to have the sealing agent layer 31 hold the layer 3, as shown in Fig. 21. In the third place, a sealing agent layer 61 having a peeling layer 62 was bonded onto the layer 3 and the sealing agent layer 31 so as to form a through hole 63, as shown in Fig. 22. Here, a layer having a thickness the sum of the thicknesses of the sealing agent layers 41 and 51 in Embodiment 1 was used for the sealing agent layer 61. In the fourth place, the electrolyte 4a and the negative active material 5a were applied within the through hole 63 in this order and dried, and then the peeling layer 62 was removed to have the sealing agent layer 61 hold the layers 4 and 5, as shown in Fig. 23.

Since the installation process for installing the sealing agent layer comprises two processes according to the method of this embodiment, the work is simplified as compared with the three processes of Embodiment 1. Other functions and effects are the same as in Embodiment 1.

### Embodiment 3

Fig. 24 through Fig. 27 are vertical sectional views showing the method of this embodiment in order of process. In these figures, components the same as in Embodiment 1 are shown by the same numbers. Two sealing agent layers are used as described below, but otherwise the method of this embodiment is the same as that of Embodiment 1.

In the first place, in the method of this embodiment, a sealing agent layer 71 having a peeling layer 72 was bonded onto the positive current collector plate 1 on the base paper 11 so as to form a through hole 73, as shown in Fig. 24. Here, a layer having a thickness the sum of the thicknesses of the sealing agent layers 31 and 41 in Embodiment 1 was used for the sealing agent layer 71. In the second place, the positive active material 3a and the electrolyte 4a were applied within the through hole 73 in this order and dried, and then the peeling layer 72 was removed to have the sealing agent layer 71 hold the layers 3 and 4, as shown in Fig. 25. In the third place, a sealing agent layer 51 having a peeling layer 52 was bonded onto the layer 4 and the sealing agent layer 71 so as to form a through hole 53, as shown in Fig. 26. In the fourth place, the negative active material 5a was applied within the through hole 53 and dried, and then the peeling layer 52 was removed to have the sealing agent layer 51 hold the layer 5, as shown in Fig. 27.

Since the installation process for installing the sealing agent layer comprises two processes according to the method of this embodiment, the work is simplified as compared with the three processes of Embodiment 1. Other functions and effects are as in Embodiment 1.

### Embodiment 4

Fig. 28 and Fig. 29 are vertical sectional views showing the method of this embodiment in order of process. In these figures, components the same as in Embodiment 1 are shown by the same numbers. Only one sealing agent layer is installed, as described below, but otherwise the method of this embodiment is the same as Embodiment 1.

In the first place, in the method of this embodiment, a sealing agent layer 81 having a peeling layer 82 was bonded onto the positive current collector plate 1 on the base paper 11 so as to form a through hole 83, as shown in Fig. 28. Here, a layer having a thickness the sum of the thicknesses of the sealing agent layers 31, 41 and 51 in Embodiment 1 was used for the sealing agent layer 81. In the second place, the positive active material 3a, the electrolyte 4a and the negative active material 5a were applied within the through hole 83 in this order and dried, and then the peeling layer 82 was removed to have the sealing agent layer 81 hold the layers 3, 4 and 5, as shown in Fig. 29.

Since the installation process for installing the sealing agent layer comprises one process according to the method of this embodiment, the work is simplified as compared with the three processes of Embodiment 1. Other functions and effects are as in Embodiment 1.

### Industrial Applicability

The manufacturing method of this invention is effectively utilized in a production site where a high efficient film type battery is mass-produced.

## Claims

1. A manufacturing method for a film-type battery, equipped with a generating element (10) composed of a positive active material (3), an electrolyte material (4) and a negative active material (5) placed one upon another in a layer structure between first and second current collector plates (1,2), which includes the following process sequence:
(a) application of a sealing layer (31) on a substrate,
(b) subsequent creation of a through-hole through the sealing layer by half-cutting, to form a laminar recess defined by the side of the through-hole in the sealing layer (33) and the upper surface of the substrate, and
(c) filling of the recess with a said material for the generating element;
carried out at least once, with the first current collector plate as substrate, and optionally repeated thereafter.

2. A manufacturing method of claim 1 in which the process sequence (a), (b), (c) is carried out three times:
firstly using the first current collector plate (1) as the substrate as aforesaid and filling the recess with one-side active material (3a),
secondly using the thus-formed layer structure with the one-side active layer uppermost as the substrate and filling the recess with the electrolyte material(4a), and
thirdly using the thus-formed layer structure with the electrolyte uppermost as the substrate and filling the recess with the other-side active material (5a).

3. A manufacturing method of claim 1 in which the process sequence (a), (b), (c) is carried out twice:
firstly using the first current collector plate (1) as the substrate as aforesaid and filling the recess with one-side active material (3a),
secondly using the thus-formed layer structure with the one-side active layer uppermost as the substrate and filling the recess with electrolyte material (4a) and the other-side active material (5a).

4. A manufacturing method of claim 1 in which the process sequence (a), (b), (c) is carried out twice:
firstly using the first current collector plate (1) as the substrate and filling the recess with one-side active material (3a) and electrolyte material (4a), and
secondly using the thus-formed layer structure with the electrolyte uppermost as the substrate and filling the recess with the other-side active material (5a).

5. A manufacturing method of claim 1 in which the process sequence (a), (b), (c) is performed once, using the first current collector plate (1) as the substrate as aforesaid and filling the recess with one-side active material (3a), electrolyte material (4a) and the other-side active material (5a).

6. A manufacturing method of any one of the preceding claims in which at least one of the first and second current collector plates (1,2) comprises a foil or a deposition film having a thickness of 0.001 mm to 0.05 mm, and a base paper (11,21) comprising sealing agent is stuck to that current collector plate.

7. A manufacturing method of any one of the preceding claims in which a component (31,41,51) having a peeling layer (32,42,52) on its surface is used for the sealing layer in at least one said process sequence, and the peeling layer is removed after the filling of the recess by material for the generating element.

8. A manufacturing method of claim 7, in which the thickness of the peeling layer (32,42,52) is set approximately equal to the difference of thickness before and after drying of the material for the generating element contained in the recess.

## Patentansprüche

1. Herstellungsverfahren für eine Batterie vom Folientyp, die mit einem Erzeugerelement (10) versehen ist, bestehend aus einem positiven, aktiven Material (3), einem Elektrolyt-Material (4) und einem negativen, aktiven Material (5), die zwischen der ersten und der zweiten Stromkollektorplatte (1, 2) in einer Schichtstruktur übereinander angeordnet sind, welches den folgenden Verfahrensablauf einschließt:
(a) das Auftragen einer Dichtungsschicht (31) auf einem Substrat;
(b) die nachfolgende Erzeugung eines Durchgangslochs durch die Dichtungsschicht durch Halbschneiden, um eine laminare Vertiefung zu bilden, die durch die Seite des Durchgangslochs in der Dichtungsschicht (33) und die obere Oberfläche des Substrats definiert ist, und
(c) das Füllen der Vertiefung mit dem Material für das Erzeugerelement;
welche mit der ersten Stromkollektorplatte als Substrat wenigstens einmal durchgeführt wird und gegebenenfalls danach wiederholt wird.

2. Herstellungsverfahren gemäß Anspruch 1, in dem der Verfahrensablauf (a), (b), (c) dreimal durchgeführt wird, indem man:
erstens die erste Stromkollektorplatte (1) wie oben aufgeführt als Substrat verwendet und die Vertiefung mit dem auf der einen Seite aktiven Material (3a) füllt,
zweitens die so gebildete Schichtstruktur als Substrat verwendet, wobei die auf der einen Seite aktive Schicht zuoberst vorliegt, und die Vertiefung mit dem Elektrolyt-Material (4a) füllt, und
drittens die so gebildete Schichtstruktur als Substrat verwendet, wobei der Elektrolyt zuoberst vorliegt, und die Vertiefung mit dem auf der anderen Seite aktiven Material (5a) füllt.

3. Herstellungsverfahren gemäß Anspruch 1, in dem der Verfahrensablauf (a), (b), (c) zweimal durchgeführt wird, indem man
erstens die erste Stromkollektorplatte (1) wie oben aufgeführt als Substrat verwendet und die Vertiefung mit dem auf der einen Seite aktiven Material (3a) füllt,
zweitens die so gebildete Schichtstruktur als Substrat verwendet, wobei die auf der einen Seite aktive Schicht zuoberst vorliegt, und die Vertiefung mit dem Elektrolyt-Material (4a) und dem auf der anderen Seite aktiven Material (5a) füllt.

4. Herstellungsverfahren gemäß Anspruch 1, in dem der Verfahrensablauf (a), (b), (c) zweimal durchgeführt wird, indem man
erstens die erste Stromkollektorplatte (1) als Substrat verwendet und die Vertiefung mit dem auf der einen Seite aktiven Material (3a) und Elektrolyt-Material (4a) füllt und
zweitens die so gebildete Schichtstruktur als Substrat verwendet, wobei der Elektrolyt zuoberst vorliegt, und
die Vertiefung mit dem auf der anderen Seite aktiven Material (5a) füllt.

5. Herstellungsverfahren gemäß Anspruch 1, in dem der Verfahrensablauf (a), (b) , (c) einmal durchgeführt wird, indem man
erstens die erste Stromkollektorplatte (1) wie oben aufgeführt als Substrat verwendet und die Vertiefung mit dem auf der einen Seite aktiven Material (3a) , Elektrolyt-Material (4a) und dem auf der anderen Seite aktiven Material (5a) füllt.

6. Herstellungsverfahren gemäß irgendeinem der vorhergehenden Ansprüche, in dem wenigstens eine der ersten und zweiten Stromkollektorplatten (1, 2) eine Folie oder eine Abscheidungsfolie einer Dicke von 0,001 mm bis 0,05 mm umfaßt, und eine Papierbasis (11, 21), die ein Abdichtungsmittel umfaßt, an der Stromkollektorplatte befestigt ist.

7. Herstellungsverfahren gemäß irgendeinem der vorhergehenden Ansprüche, in dem eine Komponente (31, 41, 51), die auf ihrer Oberfläche eine Abziehschicht (32, 42, 52) aufweist, als Abdichtungsschicht in wenigstens einem Verfahrensablauf verwendet wird, und die Abziehschicht nach dem Füllen der Vertiefung durch das Material für das Erzeugerelement entfernt wird.

8. Herstellungsverfahren gemäß Anspruch 7, in dem die Dicke der Abziehschicht (32, 42, 52) in etwa auf den Unterschied der Dicke vor und nach dem Trocknen des Materials für das in der Vertiefung enthaltene Erzeugerelement eingestellt wird.

## Revendications

1. Procédé de fabrication d'une pile du type film, munie d'un élément générateur (10) constitué par un matériau actif positif (3), un matériau d'électrolyte (4) et un matériau actif négatif (5) placés l'un sur l'autre en une structure à couches entre des première et deuxième plaques collectrices de courant (1, 2), qui comprend la séquence de traitement suivante:
(a) application d'une couche d'étanchéité (31) sur un substrat,
(b) création subséquente d'un trou traversant à travers la couche d'étanchéité par coupe par moitié, pour former une cavité laminaire délimitée par le bord du trou traversant dans la couche d'étanchéité (33) et par la surface supérieure du substrat, et
(c) remplissage de la cavité avec un matériau constituant l'élément générateur; réalisée au moins une fois, en utilisant comme substrat la première plaque collectrice de courant, et ensuite éventuellement répétée.

2. Procédé de fabrication selon la revendication 1, dans lequel la séquence de traitement (a),(b), (c) est réalisée trois fois:
premièrement en utilisant comme substrat la première plaque collectrice de courant (1), tel que précédemment indiqué, et en remplissant la cavité avec un matériau actif dans un premier sens (3a),
deuxièmement en utilisant comme substrat la structure à couches ainsi formée, la couche active dans un premier sens se trouvant au-dessus, et en remplissant la cavité avec le matériau d'électrolyte (4a), et
troisièmement en utilisant comme substrat la structure à couches ainsi formée, l'électrolyte se trouvant au-dessus, et en remplissant la cavité avec le matériau actif dans l'autre sens (5a).

3. Procédé de fabrication selon la revendication 1, dans lequel la séquence de traitement (a), (b), (c) est réalisée deux fois:
premièrement en utilisant comme substrat la première plaque collectrice de courant (1), tel que précédemment indiqué, et en remplissant la cavité avec un matériau actif dans un premier sens (3a),
deuxièmement en utilisant comme substrat la structure à couches ainsi formée, la couche active dans un premier sens se trouvant au-dessus, et en remplissant la cavité avec un matériau d'électrolyte (4a) et le matériau actif dans l'autre sens (5a).

4. Procédé de fabrication selon la revendication 1, dans lequel la séquence de traitement (a), (b), (c) est réalisée deux fois:
premièrement en utilisant comme substrat la première plaque collectrice de courant (1), et en remplissant la cavité avec le matériau actif dans un premier sens (3a) et le matériau d'électrolyte (4a), et
deuxièmement en utilisant comme substrat la structure ainsi formée, l'électrolyte se trouvant au-dessus, et en remplissant la cavité avec le matériau actif dans l'autre sens (5a).

5. Procédé de fabrication selon la revendication 1, dans lequel la séquence de traitement (a), (b), (c) est réalisée une seule fois, en utilisant comme substrat la première plaque collectrice de courant (1), tel que précédemment indiqué, et en remplissant la cavité avec un matériau actif dans un premier sens (3a), un matériau d'électrolyte (4a) et le matériau actif dans l'autre sens (5a).

6. Procédé de fabrication selon l'une quelconque des revendications précédentes, dans lequel au moins une des première et deuxième plaques collectrices de courant (1, 2) comprend une feuille ou un film de dépôt ayant une épaisseur de 0,001 mm à 0,05 mm et un papier de support (11, 21) comprenant un agent d'étanchéité est collé à cette plaque collectrice de courant.

7. Procédé de fabrication selon l'une quelconque des revendications précédentes, dans lequel un composant (31, 41, 51) présentant une couche à décollement (32, 42, 52) sur sa surface est utilisé pour la couche d'étanchéité dans au moins une séquence de traitement, et la couche à décollement est détachée après le remplissage de la cavité par un matériau constituant l'élément générateur.

8. Procédé de fabrication selon la revendication 7, dans lequel l'épaisseur de la couche à décollement (32, 42, 52) est prise à peu près égale à la différence d'épaisseur avant et après séchage du matériau constituant l'élément générateur contenu dans la cavité.
